# EUROPEAN PATENT APPLICATION

(11) **EP 4 813 599 A1**
(43) Date of publication of application: **30.09.2026**
(21) Application number: 24893990.2
(22) Date of filing: 06.11.2024
(51) Int. Cl.: B29B 9/06, B29B 7/48, B29B 7/84, B29B 7/94, B29C 48/05, B29C 48/40, B29C 48/76, B29C 48/505, C08J 3/12, C08K 5/523, C08L 55/02, C08L 69/00, B29K 25/00, B29K 69/00

(54) **METHOD FOR PRODUCING FLAME RETARDANT POLYCARBONATE RESIN COMPOSITION PELLETS**

(30) Priority: 20.11.2023 JP 2023196670
(71) Applicant: Mitsubishi Engineering-Plastics Corporation, Tokyo 105-0021 (JP)
(72) Inventor: TAJIRI, Toshiyuki, Hiratsuka-shi, Kanagawa 254-0016 (JP); TOYOTA, Akinori, Hiratsuka-shi, Kanagawa 254-0016 (JP)
(74) Representative: Müller-Boré & Partner Patentanwälte PartG mbB
(86) International application number: PCT/JP2024/039377
(87) International publication number: WO 2025/109998

(57) **Abstract**

A method for producing polycarbonate resin composition pellets from 30 to 80 mass% of a polycarbonate resin pellet (A), not less than 5 mass% and less than 25 mass% of a phosphate ester flame retardant (B) that is liquid at room temperature, 0 to 50 mass% of a polycarbonate resin flake (C), 0 to 30 mass% of a styrene resin (D) having an acrylonitrile unit; and 0 to 15 mass% of an additive (E) other than the component (B) [the total amount of (A) to (E) is 100 mass%], by using a twin screw extruder, the method comprising:
using a twin-screw extruder having three or more kneading zones and two or more vacuum vents; feeding the components (A), (C), (D) and (E) into the twin screw extruder, and melt-kneading in a first kneading zone; decompressing a first vacuum vent to devolatilize; retaining the molten components in a second kneading zone; feeding the phosphate ester flame retardant (B) that is liquid at room temperature; kneading the molten components with the phosphate ester flame retardant (B) that is liquid at room temperature in a third kneading zone; and decompressing a second vacuum vent to devolatilize and extruding from a die.

## Description

### [Technical Field]

The present invention relates to a production method for flame-retardant polycarbonate resin composition pellets.

### [Background Art]

Polycarbonate resin has excellent heat resistance and mechanical properties and, thus, is widely used as materials for component manufacturing in various fields, including electric and electronic equipment, vehicles such as automobiles, OA equipment such as printers and copiers, housing, architecture, and other industries.

Such products need to be flame retardant from a safety perspective to prevent fire caused by high temperature. In particular, flame-retardant polycarbonate resin compositions are suitably used for housings, etc. of OA equipment such as printers and copiers, PCs, various mobile terminals, batteries and the like.

Meanwhile, in response to recent growing environmental concerns, there is strong social demand for recycled resin, and regulations are being strengthened under various legal systems. The use of recycled resin is particularly required for outer packages, housings, etc. of OA equipment, electronic equipment and the like, and there are increasing demands for polycarbonate resin compositions containing a predetermined amount of recycled resin.

Thermoplastics can be recycled from used products by the following process: pulverizing a thermoplastic member recovered from equipment parts; washing the pulverized mixture with a cleaning solution; and separating a thermoplastic pulverized product from the pulverized mixture, as described in, for example, PTL 1.

Examples of raw materials for recycled polycarbonate resin include optical disks such as CDs and DVDs, automobile headlamps, and containers such as water bottles. These materials are pulverized, washed, separated, recovered, and pelletized for recycling. Further, side products left in sprues and runners during molding process are also repalletized for use in recycling.

Recycled materials for use in especially OA equipment, etc. need to be highly flame retardant.

In order to impart flame retardancy to polycarbonate resin, it has been widely known to add halogenated flame retardants, such as organobromine compounds, to the polycarbonate resin. Nowadays, phosphorous flame retardants are proposed and becoming mainstream.

### [Citation List]

### [Patent Literature]

[PTL 1] JP 2000-198116 A

### [Summary of Invention]

### [Technical Problem]

Phosphorous flame retardants, such as phosphate ester flame retardants, are classified into those that are solids and those that are liquids at room temperature. Liquid phosphorous flame retardants have to be fed into an extruder in liquid form. When the liquid phosphorous flame retardant is melt-kneaded in the extruder with a pellet-shaped polycarbonate resin, such as the recycled polycarbonate resin as described above, the polycarbonate resin is difficult to mix with the liquid phosphorous flame retardant. As a result, the following problems may occur: part of the polycarbonate resin remains unmelted; vent-up occurs at a vent opening; high output cannot be achieved; and a strand cannot be extruded. Further, the pellet-shaped polycarbonate resin easily absorbs moisture, which volatilizes into vapor and expands in volume under high temperature in the extruder. The moisture vapor tends to hinder sufficient kneading, making it further difficult for the polycarbonate resin to mix with the liquid phosphorous flame retardant. The moisture vapor volatilizes in large amounts through a vacuum vent, forming high-speed upward air flow that easily causes the molten resin to be pushed up to the vacuum vent, which is commonly known as vent-up. When vent-up occurs, a pressure-reducing pipe is blocked, so that the pressure-reducing function is lost. As a result, it becomes impossible to remove volatile components from the resin.

An object (purpose) of the present invention is to provide a method for producing polycarbonate resin composition pellets by efficiently melt-kneading a liquid phosphorous flame retardant with a pellet-shaped polycarbonate resin. In particular, recycled polycarbonate resin pellets, which are obtained through the process of pulverization, washing, separation and pelletization of a product, easily absorb moisture, and moisture vapor tends to hinder sufficient kneading. As such, the recycled polycarbonate resin is difficult to mix with the liquid phosphorous flame retardant, and a large amount of moisture vapor easily causes vent-up.

In view of these problems, the object (purpose) of the present invention is to provide a production method for flame-retardant polycarbonate resin composition pellets containing a liquid phosphorous flame retardant.

### [Solution to Problem]

As a result of intensive studies to achieve this purpose, the present inventors have found an efficient method for producing a flame-retardant polycarbonate resin composition with a twin screw extruder by adding a phosphate ester flame retardant that is liquid at room temperature to a polycarbonate resin pellet. More specifically, the method includes: feeding a polycarbonate resin pellet and other raw materials into a twin screw extruder that includes three or more kneading zones and two or more vacuum vents, and melt-kneading in a first kneading zone; removing moisture vapor and volatile components through a first vacuum vent; melt-kneading and retaining the resin in a second kneading zone; adding a liquid phosphorous flame retardant; kneading the molten resin with the liquid flame retardant in a third kneading zone; and decompressing a second vacuum vent to devolatilize remaining volatile components and extrude from a die.

The present invention relates to a production method for flame retardant polycarbonate resin composition pellets as described below.
1. A method for producing polycarbonate resin composition pellets from 30 to 80 mass% of a polycarbonate resin pellet (A), not less than 5 mass% and less than 25 mass% of a phosphate ester flame retardant (B) that is liquid at room temperature, 0 to 50 mass% of a polycarbonate resin flake (C), 0 to 30 mass% of a styrene resin (D) having an acrylonitrile unit; and 0 to 15 mass% of an additive (E) other than the component (B) [the total amount of (A) to (E) is 100 mass%], by using a twin screw extruder,
   the method comprising: using a twin-screw extruder having three or more kneading zones and two or more vacuum vents; feeding the components (A), (C), (D) and (E) into the twin screw extruder, and melt-kneading in a first kneading zone; decompressing a first vacuum vent to devolatilize; retaining the molten components in a second kneading zone; feeding the phosphate ester flame retardant (B) that is liquid at room temperature; kneading the molten components with the phosphate ester flame retardant (B) that is liquid at room temperature in a third kneading zone; and decompressing a second vacuum vent to devolatilize and extruding from a die.
2. A method for producing polycarbonate resin composition pellets comprising 30 to 80 mass% of a polycarbonate resin pellet (A), not less than 5 mass% and less than 25 mass% of a phosphate ester flame retardant (B) that is liquid at room temperature, 0 to 50 mass% of a polycarbonate resin flake (C), 0 to 30 mass% of a styrene resin (D) having an acrylonitrile unit; and 0 to 15 mass% of an additive (E) other than the component (B) [the total amount of (A) to (E) is 100 mass%], by using a twin screw extruder,
   the method comprising: using a twin-screw extruder having three or more kneading zones and two or more vacuum vents; feeding the components (A), (C), (D) and (E) into the twin screw extruder, and melt-kneading in a first kneading zone; decompressing a first vacuum vent to devolatilize; retaining the molten components in a second kneading zone; feeding the phosphate ester flame retardant (B) that is liquid at room temperature; kneading the molten components with the phosphate ester flame retardant (B) that is liquid at room temperature in a third kneading zone; and decompressing a second vacuum vent to devolatilize and extruding from a die. 3. The production method of the above 1 or 2, wherein the polycarbonate resin pellet (A) has a moisture absorption rate of not less than 2000 ppm.
4. The production method of any one of the above 1 to 3, wherein the polycarbonate resin pellet (A) comprises a recycled material.
5. The production method of any one of the above 1 to 4, wherein the additive (E) contains polytetrafluoroethylene dispersion.
6. A pellet produced by the production method of any one of the above 1 to 5.

### [Advantageous Effects of Invention]

The production method of the present invention makes it possible to promote melt-kneading and to reduce the amount of moisture vapor from a second vacuum vent, whereby no vent-up occurs and a strand can be extruded stably.

### [Brief Description of Drawings]

[Fig. 1]

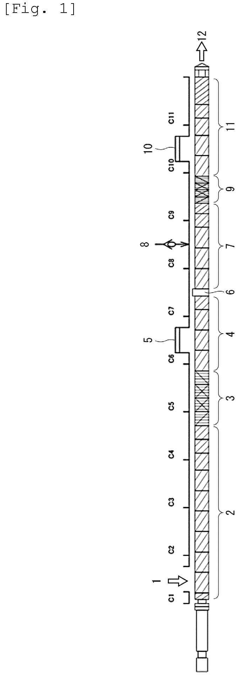

   Fig. 1 is a cross-sectional view showing an example of the configuration of an extruder for use in a method of the present invention.
[Fig. 2]

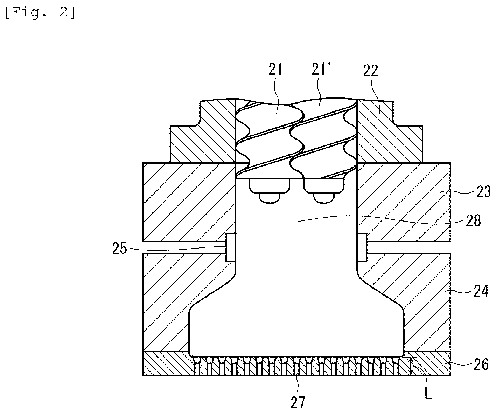

   Fig. 2 is a view showing a die portion of an extruder used in Examples.

### [Description of Embodiments]

Hereinafter, the present invention will be described in detail by way of embodiments and examples, but the present invention is not limited to the embodiments, the examples and the like.

Raw materials used in a production method for polycarbonate resin composition pellets according to the present invention are as follows: 30 to 80 mass% of a polycarbonate resin pellet (A); not less than 5 mass% and less than 25 mass% of a phosphate ester flame retardant (B) that is liquid at room temperature; 0 to 50 mass% of a polycarbonate resin flake (C); 0 to 30 mass% of a styrene resin (D) having an acrylonitrile unit; and 0 to 15 mass% of an additive (E) other than (B). The total amount of (A) to (E) is 100 mass%.

Pellet as used herein refers to a granular material obtained by melting resin or a resin composition and forming the molten resin into a piece that is about 2 to 5 mm long so that it is easy to work with. In general, the molten resin is extruded from a die into a strand, cooled, and then cut into pellets.

### Polycarbonate resin pellet (A)

The polycarbonate resin pellet (A) may be an unused (i.e., virgin) pellet, a recycled pellet, or a pellet containing a recycled pellet. The recycled pellet is preferably produced from, for example, optical disks such as CDs and DVDs, light guide plates, automotive window glass and automotive headlamp lenses, transparent vehicle members such as windshields, containers such as water bottles, ophthalmic lenses, or architectural members such as soundproof walls, glass windows, corrugated sheets, etc. Further examples include non-conforming products during molding process, pulverized products left in sprues and runners, and repellets made from the above-described products after pulverization, washing, separation, and recovery. Hereinafter, these recycled materials, repellets, etc. may also be collectively referred to as recycled materials.

The production method for polycarbonate resin composition pellets according to the present invention preferably uses the pellet made from the recycled materials. As stated above, the recycled polycarbonate resin pellet, which is obtained through the process of pulverization, washing, separation and pelletization of a product, easily absorbs moisture, and moisture vapor tends to hinder sufficient kneading. As such, the recycled polycarbonate resin is difficult to mix with a liquid phosphorous flame retardant, and a large amount of moisture vapor easily causes vent-up.

The recycled materials often contain not only polycarbonate resin but also other resins and various additives. Any recycled material can be used as long as the proportion of polycarbonate resin in the polycarbonate resin pellet (A) is more than 40 mass%, preferably more than 50 mass%, more preferably more than 60 mass%, more than 70 mass%, or more than 80 mass%, and particularly preferably more than 90 mass%, and may be 100 mass% at its maximum. The recycled polycarbonate resin pellet is also available from manufacturers of recycled materials.

The polycarbonate resin pellet (A) preferably has a moisture absorption rate (moisture content) of not less than 2000 ppm. More specifically, the polycarbonate resin pellet (A) preferably has a moisture absorption rate of not less than 2000 ppm when fed into an extruder. If the polycarbonate resin pellet has a lower moisture absorption rate, it is easily charged, and a spark is likely to occur on a production line. If the polycarbonate resin pellet with a lower moisture absorption rate is used in combination with other powdery raw materials, a dust explosion becomes highly likely to occur.

The moisture absorption rate of the polycarbonate resin pellet (A) is more preferably not less than 2300 ppm, still more preferably not less than 2500 ppm. Meanwhile, the moisture absorption rate is preferably not more than 5000 ppm, more preferably not more than 4500 ppm, and particularly preferably not more than 4000 ppm, because the polycarbonate resin pellet that has absorbed a lot of moisture is difficult to knead.

The moisture absorption rate is measured by the method described in Examples.

### [Polycarbonate resin]

Examples of the polycarbonate resin include aromatic polycarbonate resins, aliphatic polycarbonate resins, and aromatic-aliphatic polycarbonate resins. The polycarbonate resin is preferably an aromatic polycarbonate resin, and more specifically an aromatic polycarbonate polymer or copolymer obtained by the reaction of an aromatic dihydroxy compound with phosgene or diester carbonate.

Examples of the aromatic dihydroxy compound include 2,2-bis(4-hydroxyphenyl)propane (i.e., bisphenol A), 2,2-bis(3-methyl-4-hydroxyphenyl)propane (i.e., bisphenol C), tetramethylbisphenol A, α,α'-bis(4-hydroxyphenyl)-p-diisopropylbenzene, hydroquinone, resorcinol, and 4,4'-dihydroxydiphenyl.

Preferred examples of the polycarbonate resin include those obtained using, as the dihydroxy compound, bisphenol A, a combination of bisphenol A and another aromatic dihydroxy compound, bisphenol C, or a combination of bisphenol C and another aromatic dihydroxy compound (especially, bisphenol A).

The polycarbonate resin may be a homopolymer consisting of a single repeating unit or a copolymer consisting of two or more different repeating units. The copolymer may be any type of copolymer, such as a random copolymer or a block copolymer.

The polycarbonate resin may have any molecular weight. The viscosity-average molecular weight (Mv) is usually about 10,000 to 100,000, preferably about 12,000 to 35,000. The viscosity-average molecular weight not lower than the lower limit of the above range makes it possible to further enhance the mechanical strength of the polycarbonate resin composition, and thus is more suitable for applications where high mechanical strength is required. Meanwhile, the viscosity-average molecular weight not higher than the upper limit of the above range makes it possible to improve the polycarbonate resin composition by suppressing a decrease in fluidity, whereby the polycarbonate resin composition has enhanced moldability and can be easily subjected to thin wall molding.

It is also possible to use a mixture of two or more polycarbonate resins having different viscosity-average molecular weights, in which case the mixture may contain a polycarbonate resin whose viscosity-average molecular weight falls outside the aforementioned preferred range. It is preferable that the mixture of polycarbonate resins has a viscosity-average molecular weight within the above range.

The viscosity-average molecular weight (Mv) of the polycarbonate resin in the present invention is calculated using the following Schnell's viscosity equation: $\left[η\right] = 1.23 \times {10}^{- 4} {Mv}^{0.83} ,$ where [η] is the intrinsic viscosity of a methylene chloride solution of the polycarbonate resin that is obtained based on viscosity measurement at 25°C using an Ubbelohde viscometer.

The production method for the polycarbonate resin is not particularly limited and can be either the phosgene method (interfacial polymerization method) or the melting method (transesterification method). The polycarbonate resin obtained by the melting method may be preferably subjected to posttreatment to adjust the amount of terminal OH groups.

### [Phosphate ester flame retardant (B)]

The phosphate ester flame retardant for use in the present invention is liquid at room temperature. As used herein, "liquid at room temperature" means being a liquid at 23°C.

The phosphate ester flame retardant may be a phosphate-based compound, a condensed phosphate ester or the like, and is preferably a condensed phosphate ester.

The condensed phosphate ester is particularly preferably a phosphate ester compound represented by general formula (1) below that is liquid at room temperature. 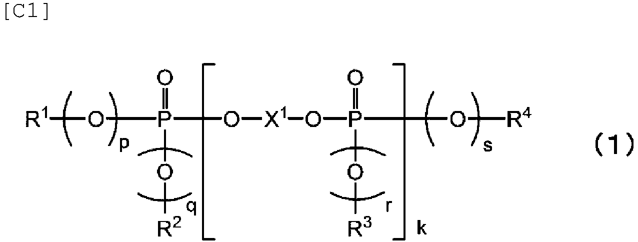 where R¹, R², R³ and R⁴ are each a C₆₋₂₀ aryl group that may be substituted by a C₁₋₆ alkyl group or an alkyl group; p, q, r and s are each 0 or 1; k is an integer of 1 to 5; and X¹ is an arylene group.

The phosphate ester compound represented by general formula (1) may be a mixture of the compounds with different k values, in which case k is the average of the k values of these compounds. For the mixture of the compounds with different k values, the average k value is preferably in a range of from 1 to 2, more preferably 1 to 1.5, still more preferably 1 to 1.2, and particularly preferably 1 to 1.15.

In general formula (1), X¹ is a divalent arylene group that is derived from a dihydroxy compound, such as resorcinol, hydroquinone, bisphenol A, 2,2'-dihydroxybiphenyl, 2,3'-dihydroxybiphenyl, 2,4'-dihydroxybiphenyl, 3,3'-dihydroxybiphenyl, 3,4'-dihydroxybiphenyl, 4,4'-dihydroxybiphenyl, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene, or 2,7-dihydroxynaphthalene. Among them, X¹ is particularly preferably a divalent group derived from bisphenol A or 3,3'-dihydroxybiphenyl.

In general formula (1), p, q, r and s are each 0 or 1, and are preferably 1.

In the general formula, R¹, R², R³ and R⁴ are each a C₆₋₂₀ aryl group that may be substituted by a C₁₋₆ alkyl group or an alkyl group. Examples of this aryl group include phenyl group, cresyl group, xylyl group, isopropylphenyl group, butylphenyl group, tert-butylphenyl group, di-tert-butylphenyl group, and p-cumylphenyl group. Among them, phenyl group, cresyl group and xylyl group are more preferable.

The phosphate ester compound represented by general formula (1) that is liquid at room temperature may be specifically preferably bisphenol A bis(diphenyl phosphate), and is commercially available from, for example, ADEKA Corporation under the name "ADK STAB FP-600" and from DAIHACHI Chemical Industry Co., Ltd. under the name "CR-741".

### [Production of polycarbonate resin composition pellets]

The production method of the present invention includes: a first step of feeding the polycarbonate resin pellet (A) and the other components (C) to (E) into a twin screw extruder, kneading in a first kneading zone, and decompressing a first vacuum vent to devolatilize volatile components; a second step of retaining the resin in a second kneading zone, adding the phosphate ester flame retardant (B) that is liquid at room temperature downstream of the second kneading zone, and kneading in a third kneading zone; and a third step of decompressing a vent downstream of the third kneading zone to devolatilize remaining volatile components and extruding the resultant resin composition.

The production method of the present invention uses a twin screw extruder. A variety of twin screw extruders can be used, and the screw rotation type may be co-rotating or counterrotating. The twin screw extruder for use in the present invention is preferably a same direction meshing type twin screw extruder and includes three or more kneading zones and two or more vacuum vents.

Fig. 1 is a cross-sectional view showing an example of the configuration of the twin screw extruder for use in the present invention. Fig. 1 exemplifies the cylinder configuration of the twin screw extruder, and the positions of kneading zones, vent openings and a liquid feeder for adding the phosphate ester flame retardant (B).

Hereinafter, the production method of the present invention will be described with reference to Fig. 1.

The raw materials, i.e., the polycarbonate resin pellet (A) and the other components (C) to (E), are fed into the twin screw extruder from a feeding port 1 at the base of the twin screw extruder. By means of a heated barrel and rotating screws of the extruder, the polycarbonate resin pellet (A) is transported toward a discharge port 12 on the right in Fig. 1 while being melt-kneaded. The resultant polycarbonate resin composition is discharged from the discharge port 12 in strand form, and the strand is pelletized with a pelletizer into pellets.

The polycarbonate resin pellet (A), etc. fed from the feeding port 1 is transported and preheated in a transport zone 2. For a transporting screw, a standard flighted screw element is preferably used.

The polycarbonate resin pellet (A) is then melted in a first kneading zone 3.

The kneading zone can preferably use R kneading disc, N kneading disc, L kneading disc, L screw, seal ring, and the like.

The R kneading disc, which is also referred to as a forward transport kneading disc (hereinafter, may be referred to as "R"), usually has two or more blades with a helix angle ⊙ of 10 to 75 degrees formed therebetween. The blades staggered at the above angle make it possible to transport the resin and apply a strong shear force to the resin.

The N kneading disc, which is also referred to as an orthogonal kneading disc (hereinafter, may be referred to as "N"), usually has two or more blades with a helix angle ⊙ of 75 to 105 degrees formed therebetween. Since the blades are staggered at an angle of approximately 90 degrees, there is almost no force to transport the resin, but the kneading force is strong.

The L kneading disc, which is also referred to as a reverse transport kneading disc (hereinafter, may be referred to as "L"), usually has two or more blades with a helix angle ⊙ of -10 to -75 degrees formed therebetween. The L kneading disc is an element capable of creating increased pressure that acts in such a direction as to allow the flowing resin to be held back or moved backward. The L kneading disc is provided downstream of the element for promoting kneading, thereby allowing a strong kneading effect to be exerted on the resin held back.

The L screw, which is also referred to as a reverse transport screw, forms a helical structure in the opposite direction of a standard forward transport screw. This element is capable of creating increased pressure that acts in such a direction as to allow the flowing resin to be held back or moved backward. As with the L kneading disc, the L screw is provided downstream of the element for promoting kneading, thereby allowing a strong kneading effect to be exerted on the resin held back.

Each of the above-described blades usually has an elliptical shape with flat parts formed at the two vertices of the ellipse. The blade is also referred to as a disc, and each of the kneading discs is usually composed of three to seven discs. The disc may have an approximately triangular shape with three vertices; this type of disc may be referred to as a three-lobe kneading disc and can be used equally for the R, N and L. Alternatively, the kneading disc may be a twist kneading disc with a tip twisted in the screw shaft direction; this type of disc can also exert the same kneading effect.

The seal ring, which is a ring-shaped element to be fitted to the screw, serves to block about 70% to 90% of a flow channel to disrupt the resin flow, thereby increasing resin pressure. As with the L kneading disc, the seal ring is provided downstream of the element for promoting kneading, thereby allowing a strong kneading effect to be exerted on the resin held back.

The kneading zone usually includes the kneading disc and the seal ring. Alternatively, the kneading zone may also include a mixing screw, a rotor screw, and a reverse transport full-flight screw.

The mixing screw is made by cutting off the crest of the screw flight, and is a single/double/triple-threaded forward or reverse transport screw element to create a strong shear dispersion force. Examples of the mixing screw include a forward transport cut-flight mixing screw and a reverse transport cut-flight mixing screw.

The rotor screw forms an elliptical (two-bladed) or triangular rotor blade that is capable of creating a strong shear force due to a gap (tip clearance) between the rotor and the inner wall surface of the barrel.

The reverse transport full-flight screw has a structure opposite to a forward transport screw and creates a strong force to allow the resin to be held back.

The extruder in the present invention includes the kneading zones in three or more locations. Each of the first to third kneading zones includes a combination of the above-described elements, which may be combined in any way as long as they can retain the resin and create increased pressure.

The first to third kneading zones may be located together in one place or located separately in two or more places. For example, a standard forward transporting flighted element may be located between a plurality of kneading discs, in which case the length of the forward transporting flighted element is not included in the length of each of the kneading zones described below.

The twin screw extruder preferably has a screw rotation speed of about 300 to 900 rpm.

The first kneading zone 3 includes a combination of two or more of the above-described elements, preferably a combination of the R kneading disc, the N kneading disc, and the L kneading disc. For example, an RNNL configuration, an RNNNL configuration and the like are particularly preferred in which a plurality of Ns are located between an R and an L.

The first kneading zone 3 preferably has a screw configuration with a total length of 2.0 to 8.0 D (D is the cylinder inner diameter), more preferably 3.0 to 7.0 D.

The first kneading zone with the above-described configuration allows the polycarbonate resin pellet (A) and the components other than (B) to be sufficiently melted.

The molten resin is then transported in a transport zone 4 to a second kneading zone 6.

The second kneading zone 6 can include the kneading disc and the screw, and preferably includes the seal ring. The second kneading zone 6 preferably includes the seal ring, which is suitable for retaining the resin, because a first vent 5 before the second kneading zone 6 is decompressed. The second kneading zone preferably has a length of 0.3 to 2.0 D.

The first vent 5 is preferably decompressed until it reaches a gauge pressure of lower than -0.05 MPa, more preferably lower than -0.06 MPa, and still more preferably lower than -0.07 MPa, relative to atmospheric pressure (0 MPa).

Then, the resin is transported in a transport zone 7 to a third kneading zone 9. During this process, the phosphate ester flame retardant (B) in liquid form is fed by a liquid feeder 8 (e.g., a liquid supply pump) provided downstream of the second kneading zone 6.

The phosphate ester flame retardant (B) that is liquid at room temperature is added in an amount of not less than 5 mass% and less than 25 mass% relative to 100 mass% of the polycarbonate resin composition to be obtained, as described above. This amount of the phosphate ester flame retardant (B) can contribute both to high flame retardancy and high heat resistance. If the amount fed of the phosphate ester flame retardant (B) is not less than 25 mass%, heat resistance will decrease. The amount added of the phosphate ester flame retardant (B) is preferably not less than 7 mass%, more preferably not less than 10 mass%, and preferably not more than 23 mass%, particularly preferably not more than 21 mass%.

In the third kneading zone 9, the molten polycarbonate resin pellet (A), etc. is melt-kneaded with the phosphate ester flame retardant (B) that is liquid at room temperature.

The third kneading zone 9 includes a combination of the above-described elements, preferably a combination of the R kneading disc, the N kneading disc, and the L kneading disc. For example, an RNNL configuration, an RNNNL configuration and the like are particularly preferred in which a plurality of Ns are located between an R and an L.

The third kneading zone preferably has a screw configuration with a total length of 1.0 to 6.0 D, more preferably 1.5 to 5.0 D.

Then, the polycarbonate resin pellet (A), etc. and the phosphate ester flame retardant (B) that is liquid at room temperature melt-kneaded together in the third kneading zone 9 are transported further, while being devolatilized by decompression of a second vent 10 provided downstream of the third kneading zone 9.

The second vent 10 is preferably decompressed until it reaches a gauge pressure of lower than -0.05 MPa, more preferably lower than -0.06 MPa, and still more preferably lower than -0.07 MPa, relative to atmospheric pressure (0 MPa).

Thereafter, the resultant polycarbonate resin composition is extruded by an extrusion zone 11 in a strand form from an extrusion die of the discharge port 12 at the tip of the extruder.

The thus-extruded molten strand of the polycarbonate resin composition is cooled in water or the like and cut into pellets.

The shape of the die is not particularly limited, and a known die may be used. The diameter of a die hole, which depends on the extrusion pressure and the dimensions of the pellets to be obtained, is usually about 2 to 5 mm. The temperature of the polycarbonate resin composition just extruded from the extruder is preferably 280°C to 300°C, more preferably about 280°C to 290°C.

An important aspect of the manufacturing method of the present invention is that, polycarbonate resin pellets, etc., are melted in the first mixing zone (first mixing zone), then the pressure is reduced in a vacuum vent (first vent) to devolatilize to remove moisture, then the pressure is raised in a pressurizing section provided in the next mixing zone (second mixing zone), then a liquid phosphorus flame retardant is fed, and the devolatilized molten raw materials and the liquid phosphorous flame retardant are mixed in a subsequent mixing zone (third mixing zone), and the pressure is reduced in the next vacuum vent (second vent) to devolatilize and the material is extruded from the die.

By employing this process, polycarbonate resin pellets, which readily absorb moisture, and phosphorus liquid flame retardants, which are difficult to mix, can be thoroughly melt-kneaded together, while suppressing the occurrence of vent-up and enabling the efficient and productive manufacture of flame-retardant polycarbonate resin compositions.

Preferably, the method of the present invention may use not only the polycarbonate resin pellet (A) and the phosphate ester flame retardant (B) that is liquid at room temperature, but also the polycarbonate resin flake (C), the styrene resin (D) having an acrylonitrile unit, and the additive (E) other than (B). These components are contained in the following amounts relative to the total amount of (A) to (E) being 100 mass%: 0 to 50 mass% of the polycarbonate resin flake (C); 0 to 30 mass% of the styrene resin (D) having an acrylonitrile unit; and 0 to 15 mass% of the additive (E) other than (B).

These components (C) to (E) are fed from the feed port 1 at the base of the twin screw extruder, either together with the polycarbonate resin pellets (A) or in a separate feed, unless they are particularly preferable to side-feed to the extruder.

The "flake" of polycarbonate resin (C) is a commonly used term in the art that refers to a granular material including powders, fine powders, powdered substances, granules, granular substances, flaked substances, etc.

The polycarbonate resin flake (C) preferably has an average particle diameter (D50) of not more than 2 mm, more preferably not more than 1.5 mm. Further, the average particle diameter is preferably not less than 0.3 mm, more preferably not less than 0.5 mm. If the average particle diameter is larger or smaller than this, the polycarbonate resin flake (C) will be likely to cause particle segregation when mixed with other granular raw materials.

The average particle diameter (D50) refers to the particle diameter at 50% in the cumulative particle size distribution of a sample, which can be measured with a laser diffraction instrument.

The polycarbonate resin flake (C) can be obtained by, for example, producing polycarbonate resin by the interfacial polymerization method. Polycarbonate resin pellets, which have a specific surface area of about 0.001 to 0.01 m²/g, are difficult to absorb a liquid material. Thus, when polycarbonate resin pellets are kneaded with a large amount of liquid material, such as the liquid phosphate ester flame retardant, they move through the liquid material and become less likely to be subjected to shearing, which makes the melting process difficult to proceed. In contrast, polycarbonate resin flakes usually have a larger specific surface area than polycarbonate resin pellets, which is about 0.1 to 10 m²/g, and easily absorb a liquid phosphate ester flame retardant or water. Thus, the melting process proceeds easily, allowing polycarbonate resin flakes to be easily kneaded with a liquid material. In view of this, the polycarbonate resin flake (C) can be added to prevent the resin from remaining unmelted and the additives from clumping together, resulting easily in homogeneous polycarbonate resin composition pellets.

The amount added of the polycarbonate resin flake (C), if used, is 0 to 50 mass%, preferably 5 to 45 mass%, and more preferably 10 to 30 mass%.

The polycarbonate resin flake (C) preferably has a specific surface area of 0.2 to 5 m²/g. If the polycarbonate resin flake (C) has a specific surface area smaller than 0.2 m²/g, it may not be able to sufficiently absorb a liquid material, bringing little benefit to the pellets to be obtained. If the polycarbonate resin flake (C) has a specific surface area larger than 5 m²/g, it will adsorb multiple oxygen molecules on its surface and become oxidized during the kneading process, possibly resulting in pellets with poor hue. The specific surface area is more preferably 0.4 to 3 m²/g.

The specific surface area is measured by the BET method in accordance with ISO 9277:202201.

The styrene resin (D) having an acrylonitrile unit is a styrene copolymer having an acrylonitrile unit as a monomer unit, and is preferably an acrylonitrile-butadiene-styrene copolymer (ABS resin), an acrylonitrile- styrene copolymer (AS resin), an acrylate-styrene- acrylonitrile copolymer (ASA resin), etc.

As acrylonitrile exhibits strong polarity and high hydrophilicity, a styrene copolymer having an acrylonitrile unit has a high moisture absorption rate, which in some cases is about twice as high as that of polycarbonate resin. Thus, a styrene copolymer having an acrylonitrile unit, when fed into an extruder, further increases the amount of moisture vapor generated in the extruder, thereby weakening the kneading process. Further, the large amount of moisture vapor may easily cause vent-up.

The styrene resin (D) having an acrylonitrile unit is preferably fed in pellet form from the feeding port 1 at the base of the twin screw extruder along with the polycarbonate resin pellet (A).

The amount added of the styrene resin (D) having an acrylonitrile unit, if used, is 0 to 30 mass%, preferably 5 to 25 mass%.

Preferred examples of the additive (E) other than the phosphate ester flame retardant (B) that is liquid at room temperature include flame retardant aids such as fluororesin (e.g., polytetrafluoroethylene (PTFE)), various elastomers (impact resistance modifiers), mold release agents, stabilizers, fillers, reinforcing agents, other resin components, other flame retardants, coloring materials (dyes and pigments), ultraviolet absorbers, antistatic agents, antifogging agents, antiblocking agents, flow improvers, plasticizers, dispersants, and antimicrobial agents. These additives may be used alone or with one or more other additives. The total amount added of the additive (E) other than (B), if used, is 0 to 15 mass%, preferably not more than 13 mass%, more preferably not more than 12 mass% or not more than 11 mass%, and particularly preferably not more than 10 mass%.

Among the above, PTFE is suitably used to improve in particular flame retardancy. The amount of PTFE added is preferably 0.05 to 2 mass%, more preferably 0.1 to 1.5 mass%, and still more preferably 0.15 to 1 mass%.

PTFE falls into the following two categories: emulsion polymerized PTFE produced by emulsion polymerization; and suspension polymerized PTFE produced by suspension polymerization. Emulsion polymerized PTFE, which is smaller in particle diameter, is preferred. PTFE has anti-dripping properties to prevent droplets during combustion of molded articles of polycarbonate resin compositions and is used as a flame retardant aid. To achieve good anti-dripping properties, emulsion polymerized PTFE is preferred.

Emulsion polymerized PTFE is classified into PTFE fine powder and PTFE dispersion. PTFE fine powder is obtained by emulsion polymerization of tetrafluoroethylene, followed by coagulation and drying. PTFE fine powder is composed of secondary particles formed by aggregation of primary particles, and usually has a large particle size of not less than 100 µm. Examples of the PTFE fine powder include "FA500H" manufactured by Daikin Industries, Ltd., which has an average (secondary) particle diameter of about 500 µm.

PTFE dispersion is obtained by emulsion polymerization of tetrafluoroethylene, followed by concentration, and it is a milky white liquid obtained by dispersing PTFE fine particles in water. The PTFE dispersion is such that PTFE primary particles (mostly molecular particles) are stably present in the liquid. The PTFE particles have an average particle diameter of 0.05 to 1 µm. The PTFE dispersion preferably has a PTFE concentration of 20 to 80 mass%. Examples of the PTFE dispersion include "D-210C" manufactured by Daikin Industries, Ltd., which has an average particle diameter of about 0.25 µm and contains 60 mass% of PTFE primary particles and 40 mass% of water and a surfactant.

PTFE fine powder tends to form aggregates, which may be larger than 1 mm at maximum, during the kneading process.

In the absence of a reinforcing agent such as glass fiber, the extruder for producing polycarbonate resin composition pellets includes, at the tip of the cylinder, a braker plate 25 (perforated plate with multiple open holes of about a few millimeters) as shown in Fig. 2, which is often equipped with a plurality of mesh screens (metal mesh filters) to remove foreign material through filtration. However, the mesh screens capturing PTFE aggregates are gradually clogged, so that the resin is retained at the tip of the screw, resulting in increased resin pressure. As a result, the mesh screens or an extruder speed reducer could be damaged. In view of this, a resin pressure sensor is usually installed between the screw tip and the braker plate, and the extruder is electrically controlled to automatically stop operation when the resin pressure reaches about 10 MPa.

In cases where, as in the present invention, a composition containing many polycarbonate resin pellets is kneaded in the extruder, extremely strong shear and compressive forces are applied to the pellets and also to surrounding PTFE fine powder in the first kneading zone. As a result, the PTFE fine powder easily aggregates to form large aggregates, causing the mesh screens to be clogged, and the resin pressure increases easily in a short time. When the resin pressure approaches 10 MPa, the extruder needs to be stopped for replacement of the mesh screens, which leads to significant productivity decline.

PTFE dispersion, on the other hand, contains primary particles of PTFE, which are extremely small and less likely to form aggregates. Thus, even when many polycarbonate resin pellets are handled as in the present invention, the mesh screens are less likely to be clogged, and the resin pressure hardly increases. In view of this, PTFE, if used, is preferably PTFE dispersion.

PTFE dispersion, if used, is preferably fed from the feeding port 1 by method 1 or 2 below.

### (Method 1)

PTFE dispersion and the polycarbonate resin flake (preferably that produced by the interfacial polymerization method) are premixed at a ratio (mass ratio) of 1:3 to 1:30, so that the polycarbonate resin flake is allowed to absorb moisture. The thus-obtained mixture is introduced into the feeding port 1, or is further mixed with the other raw materials before being introduced into the feeding port 1. If the ratio of the polycarbonate resin flake is lower than 3 in 1:3, PTFE particles aggregate easily in the first kneading zone, as the PTFE dispersion is contained in a larger amount. If the ratio of the polycarbonate resin flake is higher than 30 in 1:30, the PTFE particles tend to be unevenly distributed when mixed with the polycarbonate resin flake, and also aggregate easily in the first kneading zone.

In the composition containing PTFE dispersion, the content of the polycarbonate resin flake (C) is preferably 5 to 45 mass%, more preferably 10 to 30 mass%, and the content of the polycarbonate resin pellet (A) is preferably 45 to 75 mass%.

### (Method 2)

PTFE dispersion is directly introduced into the feeding port 1. To introduce PTFE dispersion into the feeding port 1, a tubing pump is preferably used as a pump for liquid. Pumps other than a tubing pump, such as a plunger pump, a gear pump, and a diaphragm pump, could create a local shear force during liquid feeding, and the PTFE dispersion under the shear force may form PTFE aggregates, which could become larger and block the pump, thereby possibly making long-term liquid feeding impossible.

This method of directly introducing PTFE dispersion into the feeding port 1 can also prevent the formation of PTFE aggregates during the kneading process and suppress mesh clogging, thereby enabling long-term continuous production.

Polycarbonate resin composition pellets obtained by the production method of the present invention preferably contain 30 to 80 mass% of polycarbonate resin derived from the polycarbonate resin pellet (A); not less than 5 mass% and less than 25 mass% of the phosphate ester flame retardant (B) that is liquid at room temperature; 0 to 50 mass% of polycarbonate resin derived from the polycarbonate resin flake (C); 0 to 30 mass% of the styrene resin (D) having an acrylonitrile unit; and 0 to 15 mass% of the additive (E) other than (B). The total amount of (A) to (E) is 100 mass%.

The obtained polycarbonate resin composition pellets may be formed into molded articles by any method. Examples of the molding method include those usually applied to polycarbonate resin, such as common injection molding, ultra-high-speed injection molding, injection compression molding, multicolor injection molding, gas-assisted injection molding, molding using an insulated mold, rapid heating and cooling molding, foam molding (including supercritical fluid foaming), insert molding, in-mold coating (IMC) molding, extrusion molding, sheet molding, thermoforming, rotational molding, laminate molding, and press molding.

The resultant molded articles are suitable for use as components for OA equipment such as printers and copiers, electric equipment, electronic equipment, vehicles such as automobiles, houses, building construction, and the like. In particular, they can be suitably used as housings, etc. of OA equipment such as printers and copiers, computers, PCs, various mobile terminals, batteries and the like.

### [Examples]

Hereinafter, the present invention will be described more specifically by way of Examples. However, the present invention is not limited to the Examples below.

The Examples and Comparative Examples used a co-rotating twin screw extruder ("TEX44αIII" manufactured by The Japan Steel Works, Ltd.) The screw configuration (Fig. 1) of the extruder was as follows. The TEX44αIII extruder had a cylinder (inner) diameter D of 47 mm.

Screw configuration of first kneading zone: RNNL; each kneading disc included five discs and had a length of 0.936 D; the first kneading zone had a length of 3.744 D.

Second kneading zone: a seal ring with a diameter of 42 mm and a length of 0.5 D was used; the second kneading zone had a length of 0.5 D.

Screw configuration of third kneading zone: RNNL; each kneading disc included five discs and had a length of 0.468 D; the third kneading zone had a length of 1.872 D.

Raw materials used in the Examples and Comparative Examples were as follows.

### [Polycarbonate resin pellet (A)]

Recycled polycarbonate resin pellet (A1): "PC2010ANC" manufactured by Shanghai Ausell Material Technology Co., Ltd.;$MRF = 14 g / 10 min \left(at {300}^{∘}C and 1.2 kg load\right) ;$
3 mm of length; 2.5 to 3 mm of diameter;
0.003 m²/g of specific surface area, as measured by the BET method (volumetric method using nitrogen as the absorbate) in accordance with ISO 9277:202201.

### [Phosphate ester flame retardant (B) that is liquid at room temperature]

Bisphenol A bis(diphenyl phosphate) (B1): "ADK STAB FP-600" manufactured by ADEKA Corporation.

### [Polycarbonate resin flake (C)]

Polycarbonate resin flake (C1): "S3000F" manufactured by Mitsubishi Engineering-Plastics Corporation;
Product of interfacial polymerization;
Viscosity average molecular weight = 22000;
1.2 m²/g of specific surface area, as measured by the BET method (volumetric method using nitrogen as the absorbate) in accordance with ISO 9277:202201;
Average particle diameter D50 = 0.92 mm, as measured for a range of 0.01 µm to 3 mm based on laser light scattering wet method using "MS-3000" manufactured by Malvern Panalytical Ltd.

### [Styrene resin (D) having an acrylonitrile unit]

ABS resin pellet (D1): "SXH-330" manufactured by Nippon A&L Inc.

### [Additive (E) other than (B)]

PTFE fine powder (E1): "FA500H" manufactured by Daikin Industries, Ltd.;
PTFE dispersion (E2): "D-210C" manufactured by Daikin Industries, Ltd.

The moisture absorption rate of the recycled polycarbonate resin pellet (A) for use in the Examples and Comparative Examples was measured before it was fed into the extruder, as follows.

A Karl Fischer titrator, "CA100/VA100" manufactured by Mitsubishi Chemical Analytech Co., Ltd., was used at the following settings: a heating temperature of 280°C; a start delay time of 1 minute; a titration time of 3 minutes; a maximum titration time of 30 minutes; and an end point detection level of 0.1 µg. The pellet measured was 1 g. The measurement showed that the recycled polycarbonate resin pellet (A) contained 2800 ppm of moisture.

The moisture absorption rate of the polycarbonate resin flake (C) was also measured under the same conditions. The measurement showed that the polycarbonate resin flake (C) contained 900 ppm of moisture. It was proved that polycarbonate resin in pellet form tends to absorb about three times as much moisture as that in flake form.

The moisture absorption rate of the ABS resin pellet (D1) was also measured under the same conditions. The measurement showed that the ABS resin pellet (D1) contained 3700 ppm of moisture.

### <Examples 1 to 4 and Comparative Examples 1 to 4>

### Example 1

225 kg/h (75 mass%) of the recycled polycarbonate resin pellet (A1), 28.5 kg/h (9.5 mass%) of the polycarbonate resin flake (C1), and 1.5 kg/h (0.5 mass%) of the PTFE fine powder (E1) were fed into the TEX44αIII extruder from the feeding port 1, followed by kneading with the first kneading zone 3 and devolatilization by decompression of the first vent 5. The resultant molten resin was retained in the second kneading zone 6, to which 45 kg/h (15 mass%) of the phosphate ester flame retardant (B1) that was a liquid at room temperature was added by the liquid feeder (liquid supply pump) 8. The resultant mixture was kneaded with the third kneading zone 9, followed by devolatilization by decompression of the second vent 10. The resultant resin composition was extruded into a strand from the die, which was then cooled in a water bath and cut with a pelletizer, resulting in polycarbonate resin composition pellets. The screw rotation speed was 500 rpm, and the cylinder setting temperature was 260°C. The first and second vents were decompressed until they reached -0.09 MPa. Under these conditions, the extrusion process was performed for 10 minutes from when the resin composition was first extruded. The extrusion was successful without the occurrence of vent-up or strand breakage.

### Example 2

The same extrusion process as in Example 1 was performed, except that 165 kg/h (55 mass%) of the recycled polycarbonate resin pellet (A1), 28.5 kg/h (9.5 mass%) of the polycarbonate resin flake (C1), 60 kg/h (20 mass%) of the ABS resin pellet (D1), and 1.5 kg/h (0.5 mass%) of the PTFE fine powder (E1) were fed from the feeding port 1. Under these conditions, the extrusion process was performed for 10 minutes from when the resin composition was first extruded. The extrusion was successful without the occurrence of vent-up or strand breakage.

### Example 3

The same extrusion process as in Example 1 was performed, except that 150 kg/h (50 mass%) of the recycled polycarbonate resin pellet (A1) and 90 kg/h (30 mass%) of the polycarbonate resin flake (C1) were fed from the feeding port 1, and 60 kg/h (20 mass%) of the phosphate ester flame retardant (B1) that is liquid at room temperature was added by the liquid feeder (liquid supply pump) 8. Under these conditions, the extrusion process was performed for 10 minutes from when the resin composition was first extruded. The extrusion was successful without the occurrence of vent-up or strand breakage.

### Example 4

The same extrusion process as in Example 1 was performed, except that 162.5 kg/h (65 mass%) of the recycled polycarbonate resin pellet (A1) and 50 kg/h (20 mass%) of the ABS resin pellet (D1), without the polycarbonate resin flake (C1), were fed from the feeding port 1, followed by kneading with the first kneading zone 3, and 37.5 kg/h (15 mass%) of the phosphate ester flame retardant (B1) that is liquid at room temperature was added by the liquid supply pump 8. Under these conditions, the extrusion process was performed for 10 minutes from when the resin composition was first extruded. The extrusion was successful without the occurrence of vent-up or strand breakage.

### Comparative Example 1

The same extrusion process as in Example 1 was performed, except that the first vent was not decompressed, with the vent opening opened to the atmosphere. The resin was gradually pushed upward from the second vent, which is commonly known as vent-up, and this resin entered a pressure-reducing pipe after a few minutes and was solidified, so that the vents were unable to be decompressed. The product of the vent-up seemed such that the resin and the liquid material did not completely melt together. Further, strand breakage occurred multiple times, presumably because the molten resin and the phosphate ester flame retardant that is liquid at room temperature were not kneaded sufficiently. It was determined that no further extrusion was possible, and the extrusion process was stopped 10 minutes after the resin composition was first extruded.

### Comparative Example 2

The same extrusion process as in Example 2 was performed, except that the first vent was not decompressed, with the vent opening opened to the atmosphere. The resin was gradually pushed upward from the second vent, which is known as vent-up, and this resin entered a pressure-reducing pipe after a few minutes and was solidified, so that the vents were unable to be decompressed. The product of the vent-up seemed such that the resin and the liquid material did not completely melt together. Further, strand breakage occurred multiple times, presumably because the molten resin and the phosphate ester flame retardant that is liquid at room temperature were not kneaded sufficiently. It was determined that no further extrusion was possible, and the extrusion process was stopped 10 minutes after the resin composition was first extruded.

### Comparative Example 3

The same extrusion process as in Example 3 was performed, except that the first vacuum vent was not decompressed, with the vent opening opened to the atmosphere. The resin was gradually pushed upward from the second vent, which is known as vent-up, and this resin entered a pressure-reducing pipe after a few minutes and was solidified, so that the vents were unable to be decompressed. The product of the vent-up seemed such that the resin and the liquid material did not completely melt together. Further, strand breakage occurred multiple times, presumably because the molten resin and the phosphate ester flame retardant that is liquid at room temperature were not kneaded sufficiently. It was determined that no further extrusion was possible, and the extrusion process was stopped 10 minutes after the resin composition was first extruded.

### Comparative Example 4

The same extrusion process as in Example 4 was performed, except that the first vacuum vent was not decompressed, with the vent opening opened to the atmosphere. The resin was gradually pushed upward from the second vent, which is known as vent-up, and this resin entered a pressure-reducing pipe after a few minutes and was solidified, so that the vents were unable to be decompressed. The product of the vent-up seemed such that the resin and the liquid material did not completely melt together. Further, strand breakage occurred multiple times, presumably because the molten resin and the phosphate ester flame retardant that is liquid at room temperature were not kneaded sufficiently. It was determined that no further extrusion was possible, and the extrusion process was stopped 10 minutes after the resin composition was first extruded.

It is considered from the Examples and Comparative Examples as follows.

The polycarbonate resin pellet fed into the extruder is heated in the transport zone 2 before the first kneading zone 3. Then, the pellet is melt-kneaded strongly with the first kneading zone 3. Moisture in the polycarbonate resin pellet turns into vapor after the melt-kneading with the first kneading zone 3. The moisture in the pellet volatilizes and expands due to heat to about 2000 times its initial volume. Mathematically, the 2800 ppm (= 0.28%) moisture in the pellet volatilizes and expands to five to six times the volume of the pellet, and most of the expanded moisture remains as bubbles in the molten resin. The resin containing these bubbles passes through the seal ring in the second kneading zone 6 and is mixed with the phosphate ester flame retardant that is liquid at room temperature, followed by kneading with the third kneading zone 9. However, the multiple vapor bubbles remaining in the resin serve to weaken the kneading in the third kneading zone 9, so that the molten resin and the phosphate ester flame retardant that is liquid at room temperature cannot be mixed sufficiently. This contributes to viscosity distribution where low-viscosity and high-viscosity regions exist, whereby vent-up becomes more likely to occur. Further, as moisture vapor volatilizes in large amounts through the second vent 10, forming high-speed moisture vapor flow, the vent-up is accelerated. Additionally, the viscosity distribution leads easily to strand breakage.

In contrast, when moisture is removed through the first vent 5 as in the Examples, the vapor bubbles are reduced drastically, so that the mixing and kneading in the third kneading zone 6 is accelerated. Furhetr, the amount of moisture vapor from the second vent 10 is reduced, so that no vent-up occurs, and the resin composition can be stably extruded into a strand.

### <Examples 5 and 6>

The extrusion process was performed using the extruder equipped with the braker plate and the mesh screens, and the PTFE dispersion (E2).

As shown in Fig. 2, the twin screw extruder included two screws 21, 21' housed in the cylinder, a flange 23 at a tip 22 of the cylinder, and a die holder 24 located behind the flange 23. The braker plate (or a ring plate) 25 was placed between the flange 23 and the die holder 24. The braker plate 25 can be equipped with the mesh screens to remove foreign material and the like through filtration. In the absence of the mesh screens, the breaker plate 25 in the form of a ring, or a ring plate, is usually used. The die holder 24 is also referred to as a die plate, and the flange 23 is also referred to as a hinge plate. The die holder 24 was integrated with a die 26 that included die holes 27. A resin pressure sensor was installed at position 28.

### Example 5

The co-rotating twin screw extruder, "TEX44αIII", was mounted with the braker plate 25 as shown in Fig. 2, to which a 30 mesh screen, a 60 mesh scree, and a 30 mesh screen were attached from the downstream in the extrusion direction. Then, the extrusion process was performed for extended period of time under the same operating conditions, using the same amounts of the same raw materials as those in Example 1, except that 2.5 kg/h of the PTFE dispersion (E2) (containing 1.5 kg/h of PTFE) was used. The resin pressure was 2.8 MPa at the start of extrusion, 3.5 MPa after three hours, and 5.8 MPa after ten hours.

It was proved that the PTFE dispersion significantly suppressed a rise in resin pressure, enabling long-term continuous operation.

The extruder was stopped after 10 hours, and the mesh screens were removed and soaked in methylene chloride for a day, so that the polycarbonate resin was dissolved. The mesh screens were examined with an electron microscope, and it was found that about half of the mesh holes were clogged with the PTFE. As such, the use of the PTFE dispersion enabled 10 hours or more of continuous production. During the 10 hours of operation, no vent-up or strand breakage was observed.

### Example 6

As shown in Fig. 2, the TEX44αIII extruder was mounted with the braker plate 25, to which a 30 mesh screen, a 60 mesh scree, and a 30 mesh screen were attached from the downstream in the extrusion direction. Then, the extrusion process was performed under the same operating conditions, using the same amounts of the same raw materials as those in Example 2, except that 2.5 kg/h of the PTFE dispersion (E2) (containing 1.5 kg/h of PTFE) was used. The resin pressure was 2.5 MPa at the start of extrusion, 3.8 MPa after three hours, and 7.9 MPa after ten hours.

It was proved that the PTFE dispersion significantly suppressed a rise in resin pressure, enabling long-term continuous operation. The extruder was stopped after 10 hours, and the mesh screens were removed and soaked in methylene chloride for a day, so that the polycarbonate resin was dissolved. The mesh screens were examined with an electron microscope, and it was found that about 70% of the mesh holes were clogged with the PTFE.

As such, the use of the PTFE dispersion enabled 10 hours or more of continuous production. During the 10 hours of operation, no vent-up or strand breakage was observed.

### [Industrial Applicability]

The method of the present invention makes it possible, using an extruder, to homogeneously melt-knead a flame-retardant polycarbonate resin composition containing a pellet-shaped polycarbonate resin that easily absorbs moisture and a phosphate ester flame retardant that is liquid at room temperature and to stably extrude the resin composition into a strand without the occurrence of vent-up. Thus, it becomes possible to stably produce polycarbonate resin composition pellets, and the production method of the present invention is highly industrially applicable.

### [Reference Signs List]

- 1: Feeding port
- 2, 4, 7: Transport zone
- 3: First kneading zone
- 5: First vent
- 6: Second kneading zone
- 8: Liquid feeder
- 9: Third kneading zone
- 10: Second vent
- 11: Extrusion zone
- 12: Discharge port
- 21, 21': Screw
- 22: Tip of cylinder of extruder
- 23: Flange
- 24: Die holder
- 25: Braker plate
- 26: Die
- 27: Die hole
- 28: Installation position of resin pressure meter

## Claims

1. A method for producing polycarbonate resin composition pellets from 30 to 80 mass% of a polycarbonate resin pellet (A), not less than 5 mass% and less than 25 mass% of a phosphate ester flame retardant (B) that is liquid at room temperature, 0 to 50 mass% of a polycarbonate resin flake (C), 0 to 30 mass% of a styrene resin (D) having an acrylonitrile unit; and 0 to 15 mass% of an additive (E) other than the component (B) [the total amount of (A) to (E) is 100 mass%], by using a twin screw extruder,
the method comprising:
using a twin-screw extruder having three or more kneading zones and two or more vacuum vents;
feeding the components (A), (C), (D) and (E) into the twin screw extruder, and melt-kneading in a first kneading zone;
decompressing a first vacuum vent to devolatilize;
retaining the molten components in a second kneading zone;
feeding the phosphate ester flame retardant (B) that is liquid at room temperature;
kneading the molten components with the phosphate ester flame retardant (B) that is liquid at room temperature in a third kneading zone; and
decompressing a second vacuum vent to devolatilize and extruding from a die.

2. The production method of claim 1, wherein the polycarbonate resin pellet (A) has a moisture absorption rate of not less than 2000 ppm.

3. The production method of claim 1 or 2, wherein the polycarbonate resin pellet (A) comprises a recycled material.

4. The production method of claim 1 or 2, wherein the additive (E) contains polytetrafluoroethylene dispersion.

5. A pellet produced by the production method of claim 1 or 2.
